# DEMANDE DE BREVET EUROPEEN

(11) **EP 2 098 886 A2**
(43) Date de publication de la demande: **09.09.2009**
(21) Numéro de dépôt: 09003013.1
(22) Date de dépôt: 03.03.2009
(51) Int. Cl.: G01T 7/00, G01T 7/12

(54) **Procédé, système et balise de protection pour radiographie gamma**

(30) Priorité: 06.03.2008 FR 0801224
(71) Demandeur: MGP INSTRUMENTS, 13113 Lamanon (FR)
(72) Inventeur: Barrere, Jean-Loup, 13090 Aix en Provence (FR)
(74) Mandataire: Pouillot, Laurent Pierre Paul

(57) **Abrégé**

L'invention concerne la protection de personnes durant une radiographie gamma. On installe sur un site de radiographie un appareil (2) à source gamma, une balise (6) d'alarme à dépassement de seuil disposée à proximité de l'appareil (2) à source gamma, et un débitmètre (20) pour chaque opérateur (3). A proximité de l'appareil (2), un capteur (10) de mouvement communique avec un réseau (14) de communication, pour qu'en cas de détection de mouvement, le capteur (10) émette un signal d'intrusion vers la balise (6) et un terminal portatif (21), si le seuil est dépassé.

## Description

L'invention vise la protection des personnes durant une radiographie gamma, notamment en milieu industriel.

Les rayons gamma, sont une forme de rayonnement électromagnétique de haute énergie produits par un processus nucléaire ou subatomique, qui possèdent une longueur d'onde très courte inférieure à 5.10⁻¹² mètres.

De fait, les rayons gamma sont très pénétrants, car leur absorption par la matière est d'ordre exponentiel. Etant donné leur capacité à travers des épaisseurs importantes de métal et à impressionner des films photographiques, les rayons gammas sont particulièrement utiles industriellement, puisqu'ils rendent possible le contrôle de l'intégrité et / ou de la continuité d'une structure. Ceci permet notamment de vérifier l'état d'une soudure ou d'un contenant tel que conduit, en y révélant d'éventuelles fissures ou défauts.

Typiquement, l'inspection par radiographie gamma ou « gammagraphie » est employée dans des installations industrielles telles que centrales de production d'énergie nucléaire ou raffinerie, ou encore dans des installations militaires.

Mais les rayons gamma sont dangereux pour les êtres vivants, puisqu'ils produisent des brûlures, cancers ou mutations génétiques.

Et comme les rayons gamma sont très pénétrants, un blindage contre ces rayons requiert de grandes quantités de matière. En fonction de l'énergie et de l'intensité des rayons mis en oeuvre, des épaisseurs de plusieurs centimètres de plomb ou plusieurs décimètres de bétons sont nécessaires pour réaliser des écrans de protection suffisants.

Dans nombre d'installations, il n'est pas possible ou envisageable de mettre en place des blindages aussi épais. De la sorte, en cas d'utilisation d'un rayonnement gamma, la protection des personnes est principalement fondée sur l'isolement et l'évacuation des zones risquant d'être exposées durant la radiographie, ainsi que sur la détection in situ d'un dépassement de seuil par ces rayonnements ionisants.

Classiquement, autour de la source de rayonnement, sont délimitées visuellement à l'aide de rubans de signalisation et de panneaux lumineux notamment, des zones de travail en radioprotection dont l'accès est interdit ou réglementé.

La radioprotection est réalisée en général de la façon suivante :
- D'une part, on transporte à proximité immédiate de la source de rayonnement, une balise statique apte à opérer durant la radiographie, une détection in situ de dépassement de seuil (par exemple avec un détecteur Geiger Müller compensé en énergie). En cas de dépassement, ce type de balise émet des signaux d'alarme sonores et / ou visuels.
- D'autre part, les personnes opérant la radiographie portent individuellement des dosimètres actifs ou passifs et des débitmètres. Le document FR2534693 décrit ainsi un débitmètre à alarme portatif et miniaturisé, qui délivre un signal d'alarme sonore lorsqu'un seuil d'irradiation est dépassé.

Bien que ces mesures tiennent scrupuleusement compte de la sécurité des opérateurs de la radiographie, il peut persister des risques si des personnes étrangères à un tir de radiographie gamma ou gammagraphie, ci-après appelé « tir », venaient à se rapprocher de la source de rayonnement, en dépit des délimitations visuelles.

Ce problème mérite une attention particulière dans le cas des radiographies gamma, puisque ces rayons sont assez pénétrants pour atteindre plusieurs étages superposés de l'installation où a lieu la radiographie, et ne sont que faiblement réduits par les blindages ou cloisons de bâtiments.

Par conséquent, une personne peut être amenée à pénétrer consciemment ou inconsciemment dans la zone protégée pendant un tir et donc recevoir des quantités significatives de radiations, et ce, malgré le balisage mis en place : l'installation de tir n'est pas forcément visible car masquées par les cloisons, planchers ou plafonds de l'installation où se déroule la radiographie.

En dépit des mesures évoquées, le risque persiste donc qu'une personne se rapproche de la source de façon inacceptable,

Par ailleurs, il convient de ne pas compliquer outre mesure la mise en place d'une radiographie gamma. Celle-ci ne peut en effet souvent être effectuée que dans des fenêtres de temps assez brèves, comme dans le cas de l'arrêt pour maintenance d'une installation industrielle, qui doit être le plus bref et économique que possible.

Cependant, il conviendrait de réduire de manière significative et efficace les risques d'exposition ainsi que -le cas échéant- leur durée et intensité, durant une radiographie gamma.

A cet effet, un objet de l'invention est un procédé de protection de personnes durant une radiographie gamma.

Ce procédé,prévoit une étape préalable d'installation sur un site de radiographie, d'au moins un appareil à source gamma, une balise d'alarme à dépassement de seuil disposée à proximité de l'appareil à source gamma, et un débitmètre portatif pour chaque opérateur de radiographie.

Cette étape préalable d'installation comporte la mise en place à proximité de l'appareil à source gamma, d'au moins un capteur de mouvement fonctionnant dans une gamme de fréquences présentant une absorption par la matière au moins sensiblement égale à celle du rayonnement gamma de l'appareil.

Par exemple, le capteur de mouvement comporte un détecteur infrarouge et un détecteur radar hyperfréquence de façon à détecter des mouvements à travers des cloisons.

L'étape préalable d'installation comporte en outre l'activation d'au moins un réseau de communication, apte à relier la balise d'alarme, le capteur de mouvement et pour chaque opérateur un terminal portatif de communication.

Durant une étape de radiographie lors de laquelle la balise, le capteur de mouvement, le réseau et le terminal portatif de communication sont activés, en cas de détection de mouvement par le capteur, celui-ci émet via le réseau un signal d'intrusion d'une part vers la balise qui déclenche alors son alarme, et d'autre part vers le terminal portatif qui déclenche alors une alarme déportée d'intrusion.

Suivant ce procédé, avant l'étape de radiographie, une zone à accès interdit est configurée notamment par réglage de la distance de détection et/ou de la sensibilité d'émission du signal d'intrusion par le capteur de mouvement. En cas de perturbation d'un capteur de mouvement (machine en mouvement par exemple), il est possible de le désactiver.

Par exemple, la zone à accès interdit est tridimensionnelle et présente un diamètre de l'ordre de 10 à 60 mètres qui est sensiblement centré sur la balise d'alarme.

Suivant un mode de réalisation, le procédé comporte une phase de vérification lors de l'étape d'installation notamment, durant laquelle le terminal portable effectue une transaction avec la balise d'alarme et / ou le détecteur de mouvement, par laquelle il interroge leur bon fonctionnement et/ou initialisation et/ou activation.

Par exemple, cette phase de vérification prévoit le contrôle et un message indicateur d'état du chargement correct de l'alimentation en énergie du terminal et/ou du détecteur et/ou de la balise.

Suivant un autre mode de réalisation, le procédé comporte une phase de mise en garde lors d'un passage de l'étape d'installation à l'étape de radiographie.

Durant cette phase de mise en garde, la balise d'alarme perçoit l'activation de l'appareil à source gamma et émet, via le réseau, vers le terminal un signal de sortie de source, ceci étant traduit par un message visuel sur la balise et/ou le terminal, qui est maintenu tant que dure l'activation de l'appareil à source gamma.

Suivant une autre réalisation, le procédé comporte une phase de compte à rebours en vue d'un passage de l'étape d'installation à l'étape de radiographie.

Par exemple, cette phase de compte à rebours est pilotée par le terminal, via le réseau de communication, à distance de l'appareil à source gamma.

Suivant une réalisation, le procédé comporte une opération d'historisation de données significatives issues des appareils à source et/ou balise d'alarme et/ou terminal portatif et/ou capteur de mouvement.

Par exemple, les données significatives comportent au moins des indications, chronologies et/ou synthèses d'états et/ou de mesures.

Dans un mode de réalisation, le procédé comporte une étape d'édition de rapport d'activité par le terminal portable.

Par exemple, à l'issue d'une étape de radiographie, le terminal portable édite le rapport d'activité et/ou l'enregistre dans une mémoire sécurisée et/ou transmet ce rapport via le réseau de communication vers un poste de supervision ou analogues.

Encore une réalisation prévoit que les communications entre la balise et le terminal sont au moins en partie effectuées sans fil et/ou sécurisées.

Par exemple, les communications sans fil emploient la gamme des Ultra Haute Fréquence (UHF), notamment du type Réseau sans fil à dimensions Personnelles (Wireless Personal area Networks, i.e. WPAN) éventuellement à faible débit (Low Rate WPAN, i.e, LP WPAN).

Selon une réalisation, le procédé comporte au plus tard lors de l'étape d'installation, l'attribution d'un code identifiant spécifique notamment à la balise d'alarme et/ou au terminal de communication et/ou au capteur de mouvement et/ou à l'appareil à source gamma.

Par exemple, un paramétrage du réseau de communication et l'attribution de codes identifiants sont effectués en usine et/ou lors de maintenance hors utilisation.

Un autre objet de l'invention vise un système de protection de personnes durant une radiographie, effectuée à l'aide d'un appareil à source gamma.

Ce système comporte au moins une balise d'alarme à dépassement de seuil d'émission, un débitmètre portatif pour chaque opérateur de radiographie, au moins un capteur de mouvement fonctionnant dans une gamme de fréquence présentant une absorption par la matière au moins sensiblement égale à celle du rayonnement gamma de l'appareil.

Par exemple, le capteur de mouvement fonctionne avec un détecteur infrarouge et un détecteur radar hyperfréquence de façon à détecter des mouvements à travers des cloisons

Ce système comporte en outre un réseau de communication entre la balise d'alarme, le capteur de mouvement et le terminal portable de chaque opérateur.

Le capteur de mouvement possède des moyens de production d'un signal d'intrusion dans une zone à accès interdit autour de l'appareil à source gamma, et des moyens de transfert de ce signal d'intrusion vers le terminal portable et la balise d'alarme.

Selon une réalisation, le capteur de mouvement est intégré à la balise d'alarme. Par exemple, au moins deux capteurs sont intégrés à la balise, notamment un détecteur par hyperfréquences et un détecteur par infrarouges.

Dans une réalisation, le débitmètre (ou du moins l'affichage des doses mesurées à la balise), est intégré au terminal de communication.

Par exemple, le terminal est un ordinateur de poche comportant un écran de visualisation, des moyens de communication avec le réseau, un vibreur par exemple pour l'alarme déportée d'intrusion, un équipement sonore, ainsi qu'une alimentation en énergie à forte autonomie ou reliée au secteur,

Suivant une réalisation, le système de protection est prévu pour mettre en oeuvre le procédé évoqué plus haut.

Encore un autre objet de l'invention est une balise d'alarme pour un système et/ou pour mettre en oeuvre un procédé tels qu'évoqués.

Cette balise comporte notamment un détecteur de rayonnement gamma, par exemple un détecteur Geiger Müller ou à diode compensé en énergie, et éventuellement un éclairage d'alarme tel que gyrophare ou analogues, des moyens de communication avec le réseau, ainsi qu'une alimentation en énergie à forte autonomie ou reliée au secteur.

Mais d'autres spécificités et avantages de l'invention ressortent de la description détaillée qui suit et se réfère aux dessins annexés.

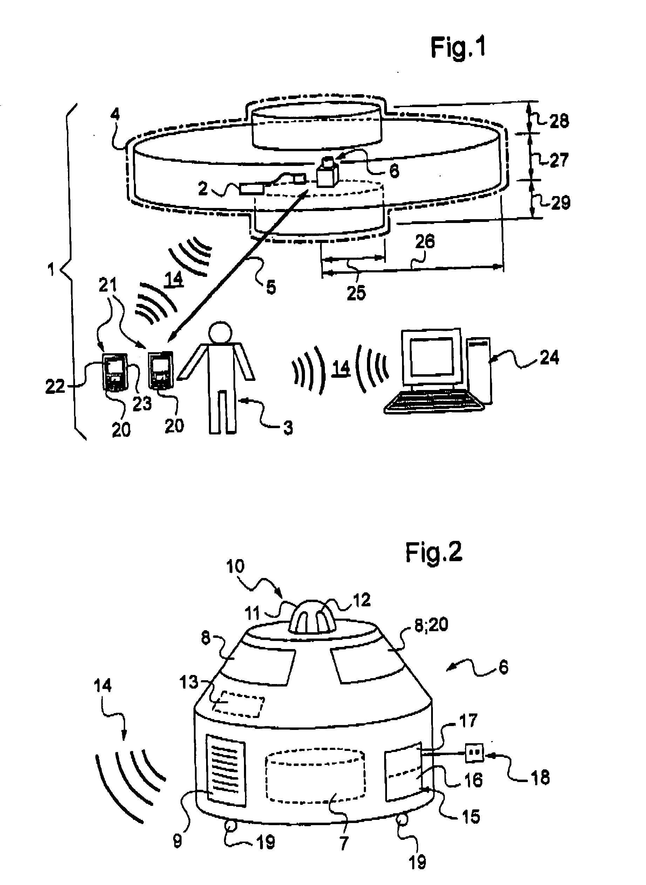

Dans ces dessins, la figure 1 est une vue schématique en perspective d'un système de protection de personnes selon l'invention, installée sur un site de radiographie possédant plusieurs étages ou niveaux, dont l'un au-dessus et l'autre en-dessous de l'emplacement d'un appareil à source gamma ainsi que d'une balise d'alarme à capteur de mouvement intégré, un réseau de communication sans fil reliant cette balise à deux terminaux portables.

Ces terminaux portables affichent le débit de dose gamma au niveau de la balise qui est transmis par celle-ci. Pour sa propre protection, l'opérateur porte un dosimètre actif et peut éventuellement utiliser un débitmètre portatif pour vérifier les débits de dose en limite de zone.

La figure 2 est une vue schématique en perspective d'une balise d'alarme selon l'invention.

Sur la figure 1, la référence numérique 1 désigne de manière générale un système destiné à la protection du personnel pendant des tirs de radiographies gamma (i.e. gammagraphie).

Ces tirs sont réalisés avec un appareil 2 à source gamma, aussi appelé appareil 2 de gammagraphie. De tels appareils 2 mettent en oeuvre des sources radioactives dont l'activité est importante ; de 80 à 120 Ci pour les sources Iridium 192, et Jusqu'à 50 Ci pour les sources de Cobalt 60.

L'objectif du système 1 de protection des radiographies est multiple. Notamment, le système 1 vise à assurer la protection radiologique d'opérateurs (tels que celui qui est désigné par la référence numérique 3 sur la figure 1) qui mettent en oeuvre cette gammagraphie.

Egalement, un but du système 1 est d'éviter qu'une personne (en particulier autre que l'opérateur 3) approche de la source 2, en prévenant immédiatement les opérateurs 3 de cette présence dans le (ou au) voisinage d'une zone 4 à accès interdit (aussi appelée parfois zone de défense).

Ainsi prévenu, l'opérateur 3 peut prendre diverses mesures d'urgence, comme par exemple évacuer l'intrus à distance de la source 2, interrompre le tir, etc.

Dans les techniques antérieures, la radioprotection des opérateurs 3 réalisant des tirs de gammagraphie était en général réalisée selon les façons suivantes :
- aucune protection : les opérateurs 3 portent des dosimètres passifs qui permettent de connaître les doses reçues a posteriori. Leur protection est réalisée par le respect des procédures (telles que la norme NF M 60-551) et l'exactitude de l'estimation de la zone de défense,
- les opérateurs 3 sont protégés par des dispositifs de protection personnel (dosimètres électroniques capables de donner une alarme en temps réel par opposition au dosimètre passif e.g, à film qui indique la dose a posteriori lors de sa lecture) : ces dispositifs protègent les opérateurs 3 mettant en oeuvre l'appareil 2 mais ne protègent pas les personnes qui pourraient s'approcher accidentellement de cet appareil 2 en cours de radiographie gamma,
- des dispositifs de protection de la zone 4 sont aussi mis en oeuvre : ils comportent des dispositifs de signalisation visuelle (rubans de signalisation, panneaux lumineux...) au niveau du périmètre de la zone 4 et/ou de balises d'alarme qui émettent une alarme sonore et visuelle en cas de détection de radiation.

Il convient de rappeler que les rayonnements ionisants sont émis de façon a priori isotrope (sauf en cas d'utilisation d'une source 2 à collimateur) et que de simples blindages (e.g. des cloisons ou caillebotis) ne constituent pas une protection efficace :
le critère à prendre exclusivement en compte pour l'estimation du danger est la distance (désignée par la référence 5 sur la figure 1) entre l'opérateur 3 exposé et la source 2 radioactive.

On a vu qu'à ce jour, l'ensemble de ces précautions proposées restent insuffisantes si des personnes ne tiennent pas compte (volontairement ou involontairement) des éléments de signalisation et d'alarme utilisés en se retrouvant consciemment ou inconsciemment dans la zone 4.

Ceci étant précisé, on décrit ci-après le système 1 conforme à l'invention.

A proximité de la source 2 sur la figure 1, le système 1 possède une balise 6 dite d'alarme ou de surveillance. On comprendra plus loin pourquoi cette balise d'alarme 6 est ici située au centre de la zone 4 qui délimite le périmètre à accès interdit durant la gammagraphie.

En se reportant à la figure 2, on remarque que la balise d'alarme 6 comporte notamment :
- un détecteur 7 de rayonnement gamma, c'est-à-dire un module de mesure du débit de dose, tel qu'un détecteur Geiger Müller ou à diode, avec un blindage de compensation en énergie ;
- un éclairage d'alarme 8, c'est-à-dire une signalisation lumineuse puissante telle qu'un gyrophare ou flash clignotant (dans une réalisation l'éclairage est en haut et les détecteur sur les côtés de la balise 6) ;
- une signalisation sonore 9 puissante, telle qu'une sirène ou analogues ;
- un capteur de mouvement 10, comportant un ensemble de détecteurs 11 à hyperfréquences (HF) et 12 à infrarouges (IR) : le capteur 10 forme et possède donc des moyens de production de signal, comme on le verra.
   De manière générale, le capteur 10 fonctionne dans une ou plusieurs gammes de fréquences présentant une absorption par la matière au moins sensiblement égale à celle du rayonnement gamma de l'appareil 2.
   Autrement dit, la gamme choisie pour le capteur 10 permet de traverser la matière environnant la source gamma.
- des moyens de transfert ou communication 13 faisant office de module de transmission de signaux et/ou messages par un réseau 14 (visible sur les figures 1 et 2).

En outre, la balise 6 possède une alimentation 15 en énergie. Sur la figure 2, la balise 6 est pourvue d'une alimentation 15 qui comporte d'une part des batteries ou accumulateurs 16 qui forment une source d'énergie autonome.

Typiquement, l'autonomie de fonctionnement de la balise 6 obtenue avec ces batteries 16 est de l'ordre de 10 heures. On remarque aussi que l'alimentation 15 comporte une liaison 17 de raccordement à un secteur 18 (par exemple en 220V-50/60Hz). Selon les réalisations, la liaison 17 permet l'alimentation directe de la balise 6 et/ou le rechargement des batteries 16.

Sur la figure 2, la référence 19 désigne des moyens de mise en position de la balise 6. Selon les versions de balise 6, ces moyens 19 comportent au moins des roues et/ou des ancrages et/ou des guides de raccordement (par exemple au secteur 18.)

On remarque sur la figure 1 que le débitmètre 20 est intégré à un terminal 21 portatif (ou portable), ici sous la forme d'une carte additionnelle (OEM) à connecteur standard.

Mals dans des réalisations, le débitmètre 20 est intégré (par exemple sous forme de carte OEM à petit format) à la balise 6, et le terminal portable 21 ne possède pas de débitmètre à proprement parler, Alors, c'est un affichage 22 du terminal 21 qui assure cette fonction d'alerte, en visualisant le débit de dose gamma mesuré à la balise 6 et transmis par la voie du réseau 14.

Sur la figure 2, le débitmètre 20 est ainsi intégré à la balise 6.

Dans l'exemple illustré, les caractéristiques nucléaires de la balise 6 sont telles que la détection gamma est réalisée avec un module dosimètre OEM (20) dont les performances sont comparables à celle d'un dosimètre électronique DMC2000S de MGP Instruments.

Ainsi, le rayonnement détecté est dans la gamme d'énergie de l'ordre de 50 keV à 6 MeV. Sa linéarité en énergie est de l'ordre de +/- 10% jusqu'à 1 Sv/h, et +/- 25% de 1 Sv/h jusqu'à 8 Sv/h. Sa gamme de mesure de débit de dose est de l'ordre de 0.1 µSv/h to 10 Sv/h. Pour 20 µSv/h, la précision est meilleure que 10% en moins d'une minute, Sa linéarité en débit de dose est de l'ordre de +/-10% sur la gamme de mesure de débit de dose. Tandis que sa précision est de l'ordre de <± 5% (137Cs, 0.2 mSv/h). Mais ces valeurs ne sont fournies qu'à titre d'exemple.

"En revenant à la figure 1, décrivons maintenant les composants du système de protection 1 dans son ensemble,

En synthèse, ce système 1 comporte outre la balise d'alarme 6 à dépassement de seuil d'émission, un débitmètre 20 ou un affichage portable de débit (22) pour chaque opérateur 3.

Ce système 1 comporte en outre le réseau 14 de communication ou transfert, qui assume l'échange de données entre la balise d'alarme 6 et donc ses capteurs 10 et un terminal portable 21 pour chaque opérateur 3.

On a vu que le capteur 10 possède des moyens de production de signaux, qui interviennent en cas d'intrusion dans la zone 4 à accès interdit autour de l'appareil 4 à source gamma, et des moyens 13 de transfert de ce signal d'intrusion notamment vers le réseau 14 auquel est connecté le terminal portable 21 et la balise d'alarme 6.

Sur la figure 1, le débitmètre 20 est intégré au terminal 2. Sur la figure 2 le débitmètre 20 est intégré à la balise 6, et emploie l'affichage 22 du terminal 21 pour avertir l'opérateur qui le porte.

Le terminal 21 de communication est ici un ordinateur de poche. Par exemple, un mode de réalisation prévoit que ce terminal est un ordinateur de poche du type HP IPAQ nx2490 dont les données techniques sont exposées par exemple sur le site Internet : http://www.hp.com/eur/handhelds.

Ce terminal ou PC possède une autonomie équivalente à celle de la balise 6 (par exemple 10 heures), ce qui permet un fonctionnement hors secteur du système 1. Outre cette alimentation en énergie à forte autonomie, le terminal 21 peut être relié au secteur 18.

Classiquement, le terminal 21 de la figure 1 est équipé d'un écran 22 de visualisation, des moyens 23 de communication avec la réseau 14, d'un vibreur par exemple pour l'alarme déportée d'intrusion, d'un équipement sonore.

Pour la bonne forme, indiquons que le terminal 21 est équipé de nombreux programmes logiciels, qui assurent le fonctionnement des composants évoqués, comme la liaison au réseau 14.

Notons ici que la figure 1 représente également un poste 24 de supervision, en fait un ordinateur ou serveur, qui est relié au système 1 par le réseau 14.

Maintenant, décrivons le procédé par lequel le système 1 assure de protection visée.

En synthèse, ce procédé prévoit une étape préalable d'installation du système 1 sur le site de radiographie. Cette étape d'installation est préalable à une étape de radiographie.

Selon les cas, la source 2 est un appareil portatif tel que ceux qui se conforment à la norme NF M 64-551. Parfois, l'appareil 2 est installé à demeure sur le site d'utilisation.

On trouve sur le site Internet de l'Institut National de Recherche et de Sécurité (INRS / http://www.inrs,fr) des fiches gammagraphie, dont les fiches ED4244, ED4243 et E04245 qui exposent des précautions et règlements à respecter pour une gammagraphie.

Ainsi, classiquement l'étape d'installation prévoit qu'autour de la source 2 de rayonnement, soient délimitées visuellement à l'aide de rubans de signalisation et de panneaux lumineux notamment, des zones de travail dont la zone 4 à accès interdit durant le tir.

Toujours durant cette étape d'installation, la balise d'alarme 6 à dépassement de seuil, est disposée à proximité de l'appareil 2 à source gamma, et on vérifie que chaque opérateur 3 soit bien doté d'un débitmètre portatif 20 (ici intégré à ou affiché via chaque terminal 21).

Durant cette étape d'installation, la mise en place à proximité de l'appareil 2 à source gamma, du capteur 10 de mouvement est assurée par la mise en place de la balise 6 qui intègre les détecteurs 11 et 12.

Puis l'installation prévoit l'activation du réseau 14 de communication, qui est comme on l'a vu apte à relier la balise d'alarme 6 et donc le capteur 10, avec le terminal portatif 21 de chaque opérateur 3. Notons que le réseau 14 comporte ici des tronçons filaires, notamment au sein de la balise 6 où certains composants sont physiquement reliés par des conducteurs électriques, par exemple sur une carte électronique intégrée.

Durant l'étape de radiographie, ultérieure à celle d'installation, la balise 6, le réseau 14 et les terminaux portatifs 21 sont activés, en cas de détection de mouvement par le capteur 10.

Alors, ce capteur 10 émet via le réseau 14 un signal d'intrusion d'une part vers la balise 6 qui déclenche à réception son alarme (sonore et visuelle).

D'autre part, en cas de détection de mouvement et de détection d'activation (souvent appelée sortie de source) de la source gamma 2, le réseau 14 émet le signal d'intrusion vers le terminal portatif 21 de chaque opérateur 3, ce qui déclenche alors sur ces terminaux 21 une alarme déportée d'intrusion. Ici, cette alarme déportée d'intrusion alerte les opérateurs 3 qu'une présence indésirable est détectée à proximité de l'appareil 2 alors que la source est sortie, et qu'une intervention d'urgence est impérative.

A cette fin, l'alarme déportée d'intrusion est ici à la fois visuelle (clignotement sur l'écran 22), sonore et également tactile via le vibreur de chaque terminal 21.

Selon la configuration du site, avant l'étape de radiographie, la zone 4 à accès interdit est configurée. En fait, à partir des consignes de sécurité applicables, on règle la distance de détection et/ou de la sensibilité d'émission du signal d'intrusion par le capteur 10 de mouvement. De la sorte, un volume de sécurité est défini autour de l'appareil 2.

Sur la figure 1, on voit ainsi que la zone 4 à accès interdit est tridimensionnelle, et présente un diamètre de l'ordre de 10 à 60 mètres qui est sensiblement centré sur la balise d'alarme 6.

Plus spécifiquement, la zone 4 est étendue suivant les dimensions 25 (ici un diamètre de l'ordre de 5m horizontalement sur un étage N-1), et 26 (ici un diamètre de l'ordre de 15m horizontalement, en champ libre sur l'étage N où l'appareil 2 est installé). La hauteur de l'étage N correspond ici à la dimension verticale 27 (ici de 3 à 6m), tandis que des étages N+1 ont des dimensions verticales 28 de l'ordre de 2m pour un étage N+1, et de l'ordre de 3 à 6m pour l'étage N-1.

Pour revenir au procédé de protection de l'invention, notons qu'il comporte une phase de vérification lors de l'étape d'installation notamment, durant laquelle un terminal portable 21 effectue une transaction avec la balise d'alarme 6 et donc le capteur de mouvement 10, Par cette transaction, le terminal 21 interroge les bons fonctionnement et/ou initialisation et/ou activation de ces composants du système 1 de protection.

Par exemple, cette phase de vérification prévoit le contrôle et un message indicateur d'état du chargement correct des alimentations en énergie des terminaux 21 du système 1, et de celui 16 de la balise 6.

Suivant une réalisation, le procédé de l'invention comporte une phase de mise en garde lors du passage de l'étape d'installation à l'étape de radiographie. Durant cette phase de mise en garde, la balise 6 perçoit l'activation de l'appareil 2 à source gamma et émet via le réseau 14 et vers les terminaux 21 un signal de sortie de source. Ceci se traduit par un message visuel 8 sur la balise 6 et sur les terminaux 21. Ce signal de sortie de source qui prévient les opérateurs 3 de l'apparition de radioactivité dans la zone 4 notamment, est maintenu tant que dure l'activation de l'appareil 2 à source gamma.

Ici le signal de sortie de source conforme au procédé de l'invention est émis dès une phase de compte à rebours à l'issue duquel est effectué le passage de l'étape d'installation à l'étape de radiographie, c'est-à-dire durant la sortie de la source gamma.

Cette phase de compte à rebours est pilotée par l'un des terminaux 21. via la réseau 14 de communication, à distance de l'appareil 2 à source gamma. Ceci également participe à l'augmentation de la sécurité durant la gammagraphie, puisque les opérateurs 3 sont éloignés de l'appareil 2 avant même que celui-ci ne soit activé.

Dans un autre ordre d'idées, le procédé de l'invention comporte une opération d'historisation de données significatives issues des appareils 2 et de la balise d'alarme 6, ainsi que des terminaux portatifs 21.

Ceci permet une traçabilité du déroulement des opérations, ce qui participe aussi à la sécurité.

Par exemple, les données significatives comportent au moins des indications, chronologies et/ou synthèses d'états et/ou de mesures, dont celles effectuées par le capteur 10.

Dans un mode de réalisation, le procédé comporte une étape d'édition de rapport d'activité par l'un ou l'autre des terminaux portables 21. A l'issue par exemple d'une étape de radiographie, un terminal 21 édite le rapport d'activité et/ou l'enregistre dans une mémoire sécurisée, Egalement, ce terminal 21 transmet ce rapport d'activité, via le réseau 14 de communication, vers le poste 24 de supervision ou d'autres structures analogues (imprimante, intranet, mémoire portable, base de données, etc.)

A partir des figures, les moyens et protocoles de communications Impliqués dans le procédé de l'invention sont exposés ci-après.

On a vu que localement, les communications à l'intérieur ou vers l'extérieur du système 1 sont au moins en partie effectuées sans fil et/ou sécurisées.

Dans l'exemple illustré, ces communications sans fil emploient la gamme des Ultra Haute Fréquence (UHF), notamment du type Réseau sans fil à dimensions Personnelles (Wireless Personal area Networks, i.e. WPAN) éventuellement à faible débit (Low Rate WPAN, i.e. LP WPAN).

Il s'agit donc de liaisons radio, et en pratique c'est le protocole Zigbee (voir le site Internet : http://www.zigbee.org) basé sur la norme IEEE802.15.4 (voir le site Internet ; http://standards.ieee.org/getieee802/index.html ) qui est appliqué ici. Dans une alternative, le protocole Xstream de la société MaxStream est employé. D'autres choix sont possibles.

Afin d'éviter les interférences et pour des raisons de sécurité, le procédé de l'invention comporte ici au plus tard lors de l'étape d'installation, l'attribution d'un code identifiant spécifique notamment à la balise 6 d'alarme (et donc au capteur 10) et au terminaux portatifs 21 ainsi qu'à l'appareil 2 à source gamma.

Plus concrètement, un paramétrage du réseau 14 de communication et l'attribution de ces codes identifiants sont effectués en usine et/ou lors de maintenance hors utilisation (par exemple pour mise à jour).

Une fois installé, le système permet de définir une zone de défense qui est la zone proche de la source dans laquelle toute présence même temporaire est considérée comme dangereuse.

A titre de synthèse, on expose maintenant diverses spécificités de l'invention, à travers ses exemples de mise en oeuvre.

On a vu que les opérateurs 3 doivent réglementairement disposer de :
- deux dosimètres électroniques 20 pour assurer leur radioprotection ; et
- un radiamètre (non représenté) permettant de contrôler le débit de dose ponctuellement et de contrôler le débit aux limites de la zone d'avertissement (autour de la zone 4 à interdiction d'accès) balisée par des affichettes et des banderoles qui ne font pas partie du système 1. Cette zone d'avertissement est délimitée en fonction d'un seuil maximal de radioactivité de par exemple 0.7µSv/h.

De ce qui précède, on comprend que des fonctions de base de l'inventions visent à :
- détecter la sortie de la source (débit de dose) hors de l'appareil 2 ;
- émettre une alarme visuelle quand la source est sortie ;
- détecter toute intrusion dans la zone 4, pour alerter les opérateurs 3 en vue d'une intervention, mais aussi pour déclencher l'alarme d'intrusion de la balise 6 ;
- donc, alerter de toute intrusion dans la zone 4 ;
- assurer un affichage de vérification du bon fonctionnement des composants du système 1 ;
- opérer des tests de bon fonctionnement et activation des capteurs 10, au démarrage du système 1 notamment ;
- transmettre toute détection de présence dans la zone 4 aux opérateurs 3 ;
- transmettre aux opérateurs 3 l'état des batteries ou piles et du détecteur 7 de la balise 6, et le cas échéant de détecteurs annexes (par exemple sur des panneaux de blindage ou caillebottis) ; et
- historier les données pendant chaque tir.

L'utilisation de terminaux 21 sous forme de PC de poche, permet d'afficher et de synthétiser les doses mesurées et les alarmes, ce qui assure une grande souplesse de fonctionnement au système 1 et ouvre la possibilité d'éventuelles fonctions en option telles que ;
- décompte automatique du temps de tir (minuteur) ;
- synthèse des informations relatives à chaque tir (historiques des débits de doses, alarmes, saisie de la dose reçue par chaque opérateur...)
- édition d'un rapport pour chaque tir sous forme d'un fichier transférable à un poste tel que 24, pour exploitation et impression.

Du point de vue matériel, le réseau 14 et les moyens de communication tels que radio 13 prévoient des modules radio ayant tous les mêmes caractéristiques, exceptées leurs dimensions,

Dans le cas de l'emploi du protocole réseau Zigbee (802.15.4), celui-ci est optimisé pour le contrôle/commande industriel, et les modules émettent dans la bande de 2,4GHz.

Leur portée est ici, avec une puissance minimale de 1 mW, de l'ordre de 100 mètres en zone découverte et 30 mètres dans un bâtiment. La puissance est maximale à 60 mW (1,6km / 300m), mais cette puissance est ajustable en fonction de la réglementation.

Par soucis de sécurisation des transactions, la transmission de données est fiabilisée par la technologie utilisée et par le protocole de communication entre les terminaux 21, les balises 6 et le cas échéant les panneaux.

Cette transmission de données est cryptée, de sorte qu'il n'est pas possible de la « pirater ».

Afin de garantir l'indépendance entre plusieurs systèmes 1 installés et employés à proximité les uns des autres, e.g. sur un même site, autrement dit pour qu'un système 1 utilisé à proximité d'un autre système 1 ne se perturbent pas mutuellement, on prévoit que les numéros d'identification des constituants de ces systèmes 1 soient différents.

Ici, tous ces paramétrages sont réalisés en usine ou lors d'opérations de maintenance/configuration en dehors des périodes d'utilisation.

Grâce à l'invention, il est possible d'obtenir des constituants du système 1 qui présentent des dimensions réduites, avec par exemple :
- le terminal 21 qui forme un module intégré dans un boîtier ;
- la balise 6 qui forme un module équipé de dispositifs (de détection gamma et radio en modules OEM) de très petites dimensions (25x30mm).

Le déploiement du réseau 14 s'opère ici avec un paramétrage du réseau 14 et l'identification des constituants du système 1 en usine. Mais des mises à jour, ou paramétrages in situ sont également possibles, par exemple via le poste 24.

On a donc compris que l'invention rend possible de manière fiable, simple et économique, une protection des aspects suivants :
- le système 1 réalise une détection de mouvements dans tout l'espace (zone 4 au moins) avec des détecteurs IR (détection en vue directe) mais aussi des détecteurs HF couvrant une sphère et capables de détecter des mouvements à travers des parois/cloisons/caillebotis;
- le système génère une alarme uniquement quand les 2 conditions suivantes sont réunies:
   - détection de présence d'une source de radiation
   - détection de mouvements à proximité.
- le système transmet par radio et en temps réel:
   - les mesures ;
   - les alarmes ;
   - l'état du système 1.

Ces informations sont traitées et affichées sur des terminaux 21 portés par les 2 opérateurs 3,
- en cas d'alarme la balise 6 émet :
   - des flashs lumineux puissants
   - une alarme sonore
   - un message à destination des terminaux 21 qui génèrent eux-mêmes :
- une alarme sonore
- une alarme visuelle
- l'ensemble du système 1 est transportable et dispose d'une autonomie supérieure à 10 heures.

L'invention n'est néanmoins pas limitée aux modes de réalisation exposés. A l'inverse, elle comprend tous les équivalente des caractéristiques décrites.

## Revendications

1. Procédé de protection de personnes durant une radiographie gamma,
**caractérisé en ce qu'**il prévoit une étape préalable d'installation sur un site de radiographie, d'au moins un appareil (2) à source gamma, une balise (6) d'alarme à dépassement de seuil disposée à proximité de l'appareil (2) à source gamma, et un débitmètre (20) pour chaque opérateur (3) de radiographie ; cette étape préalable d'installation comportant la mise en place à proximité de l'appareil (2) à source gamma, d'au moins un capteur (10) de mouvement fonctionnant dans une gamme de fréquence présentant une absorption par la matière au moins sensiblement égale à celle du rayonnement gamma de l'appareil (2), l'étape préalable d'installation comportant en outre l'activation d'au moins un réseau (14) de communication, apte à relier la balise (6) d'alarme, le capteur (10) de mouvement et pour chaque opérateur (3) un terminal (21) portatif de communication, durant une étape de radiographie lors de laquelle la balise (6), le capteur (10) de mouvement, le réseau (14) et le terminal portatif (21) de communication sont activés, en cas de détection de mouvement par le capteur (10), celui-ci (10) émettant via le réseau (14) un signal d'intrusion d'une part vers la balise (6) qui déclenche alors son alarme, et d'autre part vers le terminal portatif (21) qui déclenche alors une alarme déportée d'intrusion.

2. Procédé selon la revendication 1,
**caractérisé en ce qu'**avant l'étape de radiographie, une zone (4) à accès interdit est configurée notamment par réglage de la distance de détection et/ou de la sensibilité d'émission du signal d'intrusion par le capteur (10) de mouvement ; en particulier la zone à accès interdit (4) étant tridimensionnelle et présentant un diamètre (25-26) de l'ordre de 10 à 60 mètres qui est sensiblement centré sur la balise (6) d'alarme.

3. Procédé selon l'une des revendications 1 ou 2,
**caractérisé en ce qu'**il comporte une phase de vérification lors de l'étape d'installation notamment, durant laquelle le terminal portatif (21) effectue une transaction avec la balise (6) d'alarme et / ou le capteur (10) de mouvement, par laquelle il interroge leurs bons fonctionnement et/ou initialisation et/ou activation ; en particulier cette phase de vérification prévoyant le contrôle et un message indicateur d'état du chargement correct de l'alimentation (16) en énergie du terminal (21) et/ou du capteur (10) et/ou de la balise (6).

4. Procédé selon l'une des revendications 1 à 3,
**caractérisé en ce qu'**il comporte une phase de mise en garde lors d'un passage de l'étape d'installation à l'étape de radiographie de sorte que durant cette phase de mise en garde, la balise (6) d'alarme perçoit l'activation de l'appareil (2) à source gamma et émet via le réseau (14) vers le terminal (21) un signal de sortie de source gamma, ceci étant traduit par un message visuel sur la balise (6) et/ou le terminal (21), qui est maintenu tant que dure l'activation de l'appareil (2) à source gamma.

5. Procédé selon l'une des revendications 1 ou 4,
**caractérisé en ce qu'**il comporte une phase de compte à rebours en vue d'un passage de l'étape d'installation à l'étape de radiographie de sorte que cette phase de compte à rebours est pilotée par le terminal (21), via la réseau (14) de communication, à distance de l'appareil (2) à source gamma.

6. Procédé selon l'une des revendications 1 ou 5,
**caractérisé en ce qu'**il comporte une opération d'historisation de données significatives issues des appareil (2) à source gamma et/ou balise (6) d'alarme et/ou terminal (21) portatif et/ou capteur (10) de mouvement de sorte que les données significatives comportent au moins des indications, chronologies et/ou synthèses d'états et/ou de mesures.

7. Procédé selon l'une des revendications 1 ou 6,
**caractérisé en ce qu'**il comporte une étape d'édition de rapport d'activité par le terminal (21) de sorte qu'à l'issue d'une étape de radiographie, la terminal portatif (21) édite le rapport d'activité et/ou l'enregistre dans une mémoire sécurisée et/ou transmet ce rapport via le réseau (14) de communication vers un poste (24) de supervision ou analogues.

8. Procédé selon l'une des revendications 1 ou 7,
**caractérisé en ce qu'**il prévoit que les communications sont au moins en partie effectuées sans fil et/ou sécurisées de sorte que les communications sans fil emploient la gamme des Ultra Haute Fréquences (UHF), notamment du type Réseau sans fil à dimensions Personnelles (Wireless Personal area Networks, i.e. WPAN) éventuellement à faible débit (Low Rate WPAN, i.e, LP WPAN).

9. Procédé selon l'une des revendications 1 ou 8,
**caractérisé en ce qu'**il comporte au plus tard lors de l'étape d'installation, l'attribution d'un code identifiant spécifique notamment à la balise (6) d'alarme et/ou au terminal (21) et/ou au capteur (10) de mouvement et/ou à l'appareil (2) à source gamma de sorte qu'un paramétrage du réseau (14) de communication et l'attribution de codes identifiants sont effectués en usine et/ou lors de maintenance hors utilisation.

10. Système (1) de protection de personnes durant une radiographie, effectuée à l'aide d'un appareil (2) à source gamma, **caractérisé en ce qu'**il (1) comporte au moins: une balise (6) d'alarme à dépassement de seuil d'émission, un débitmètre (20) pour chaque opérateur (3) de radiographie, au moins un capteur (10) de mouvement fonctionnant dans une gamme de fréquences présentait une absorption par la matière au moins sensiblement égale à celle du rayonnement gamma de l'appareil (2), ce système (1) comportant en outre un réseau (14) de communication entre la balise (6) d'alarme, le capteur (10) de mouvement et un terminal portatif (21) pour chaque opérateur (3), le capteur (10) de mouvement possédant en outre des moyens de production d'un signal d'intrusion dans une zone (4) à accès interdit autour de l'appareil (2) à source gamma, et des moyens (13) de transfert de ce signal d'intrusion vers le terminal (21) et la balise (6) d'alarme.

11. Système (1) selon la revendication 10,
**caractérisé en ce que** le capteur de mouvement est intégré à la balise (6) d'alarme, de sorte qu'au moins deux détecteurs (11, 12) sont intégrés à la balise (6), notamment un détecteur (11) par hyperfréquences et un détecteur (12) par infrarouges.

12. Système (1) selon l'une quelconque des revendications 10 ou 11,
**caractérisé en ce que** le débitmètre (20) ou son affichage (22) est intégré au terminal (21) de sorte que le terminal (21) est un ordinateur de poche comportant un écran (22) de visualisation capable d'afficher le débit de dose mesuré à la balise (6), des moyens de communication avec le réseau (14), un vibreur par exemple pour l'alarme déportée d'intrusion, un équipement sonore, ainsi qu'une alimentation en énergie à forte autonomie ou reliée au secteur, tandis que le débitmètre (20) est intégré à la balise (6) sous forme de module de détection (module OEM).

13. Système (1) selon l'une des revendications 10 à 12,
**caractérisé en ce qu'**il (1) est prévu pour mettre en oeuvre le procédé selon l'une des revendications 1 à 9.

14. Balise (6) d'alarme pour un système (1) selon l'une des revendications 10 à 13 et/ou pour mettre en oeuvre le procédé selon l'une des revendications 1 à 9,
**caractérisée en ce que** cette balise (6) comporte notamment un détecteur (7) de rayonnement gamma, par exemple un détecteur Geiger Müller ou à diode compensé en énergie, et un éclairage d'alarme (8) tel qu'un gyrophare ou analogues, des moyens (13) de communication avec le réseau (14), ainsi qu'une alimentation (15-17) en énergie à forte autonomie (16) ou reliée au secteur (18).
